# EUROPEAN PATENT APPLICATION

(11) **EP 4 194 345 A1**
(43) Date of publication of application: **14.06.2023**
(21) Application number: 22211077.7
(22) Date of filing: 02.12.2022
(51) Int. Cl.: B64G 1/46, B64G 1/60, B64G 1/66, B64G 99/00

(54) **VARIABLE VOLUME AIRLOCK**

(30) Priority: 09.12.2021 US 202117546325
(71) Applicant: Hamilton Sundstrand Corporation, Charlotte, NC 28217-4578 (US)
(72) Inventor: HIMMELMANN, Ashley Rose, Beloit, WI (US); STRICKLAND, Julie, Houston, TX (US); ANDERSON, Samuel, Houston, TX (US); KAPLAN, Daniel, Melbourne Beach, FL (US); ROHRIG, Jake, Simsbury, CT (US)
(74) Representative: Dehns

(57) **Abstract**

An airlock (10) for an extraplanetary environment includes an enclosed volume (22), an interior hatch (18) separating the enclosed volume from a pressurized space (12), and an exterior hatch (26) separating the enclosed volume from an external environment (14). The enclosed volume is selectably variable to reduce a mass of resources, lost into the external environment from the enclosed volume. A method of assembling an airlock for an extraplanetary environment includes defining an enclosed volume, positioning an interior hatch at the enclosed volume separating the enclosed volume from a pressurized space, and positioning an exterior hatch at the enclosed volume separating the enclosed volume from an external environment. The enclosed volume is selectably variable to reduce a mass of resources lost into the external environment from the enclosed volume.

## Description

### BACKGROUND

Exemplary embodiments pertain to the art of extraplanetary environments, and in particular to airlocks used for entry into and exit from the extraplanetary environments.

During extravehicular activities (EVAs), personnel must transition between a pressurized volume and the external environment, using a structure referred to as an airlock. When this occurs, any air, water, or other consumable in the airlock is vented and lost from the system. Typically, a vacuum pump is utilized to remove as much air as possible from the airlock before opening a door to the external environment. After operation of the vacuum pump, however, approximately 1.0 pound mass of air remains in the airlock and is lost to the external environment when the door is opened. Maximizing the conservation of consumable resources, such as air, is imperative to long duration mission success.

### BRIEF DESCRIPTION

In one embodiment, an airlock for an extraplanetary environment includes an enclosed volume, an interior hatch separating the enclosed volume from a pressurized space, and an exterior hatch separating the enclosed volume from an external environment. The enclosed volume is selectably variable to reduce a mass of resources, lost into the external environment from the enclosed volume.

Additionally or alternatively, in this or other embodiments a pump is operably connected to the enclosed volume to remove air from the enclosed volume.

Additionally or alternatively, in this or other embodiments the pump is configured to be activated to remove air from the enclosed volume when the enclosed volume is reduced.

Additionally or alternatively, in this or other embodiments a piston is located in the airlock, such that when the piston is moved from a home position to an extended position the enclosed volume is reduced.

Additionally or alternatively, in this or other embodiments a flexible bladder at least partially defines the enclosed volume.

Additionally or alternatively, in this or other embodiments the bladder is collapsible to reduce the enclosed volume.

Additionally or alternatively, in this or other embodiments the bladder is segmented around the enclosed volume.

Additionally or alternatively, in this or other embodiments the bladder is configured to be inflated to reduce the enclosed volume.

Additionally or alternatively, in this or other embodiments a heater and/or a cooler is configured to control inflation of the bladder

Additionally or alternatively, in this or other embodiments opposing walls of the airlock are configured to collapse to reduce the internal volume.

Additionally or alternatively, in this or other embodiments the opposing walls include neither the interior hatch nor the exterior hatch.

In another embodiment, a method of assembling an airlock for an extraplanetary environment includes defining an enclosed volume, positioning an interior hatch at the enclosed volume separating the enclosed volume from a pressurized space, and positioning an exterior hatch at the enclosed volume separating the enclosed volume from an external environment. The enclosed volume is selectably variable to reduce a mass of resources lost into the external environment from the enclosed volume.

Additionally or alternatively, in this or other embodiments the method includes operably connecting a pump to the enclosed volume to remove air from the enclosed volume.

Additionally or alternatively, in this or other embodiments the method includes positioning a piston in the airlock, such that when the piston is moved from a home position to an extended position the enclosed volume is reduced.

Additionally or alternatively, in this or other embodiments the method includes positioning a flexible bladder at least partially defining the enclosed volume, wherein the bladder is collapsible to reduce the enclosed volume.

Additionally or alternatively, in this or other embodiments the bladder is segmented around the enclosed volume.

Additionally or alternatively, in this or other embodiments the bladder is configured to be inflated to reduce the enclosed volume.

Additionally or alternatively, in this or other embodiments the method includes connecting a heater and/or a cooler to the bladder to control inflation of the bladder

Additionally or alternatively, in this or other embodiments opposing walls of the airlock are configured to collapse to reduce the internal volume.

Additionally or alternatively, in this or other embodiments the exterior hatch is opened prior to the enclosed volume being selectably increased.

### BRIEF DESCRIPTION OF THE DRAWINGS

The following descriptions should not be considered limiting in any way. With reference to the accompanying drawings, like elements are numbered alike:
FIG. 1 is a first schematic illustration of an embodiment of an airlock including a piston;
FIG. 2 is a second schematic illustration of an embodiment of an airlock including a piston;
FIG. 3 is a third schematic illustration of an embodiment of an airlock including a piston;
FIG. 4 is a first schematic illustration of an embodiment of an airlock including a collapsible baffle;
FIG. 5 is a second schematic illustration of an embodiment of an airlock including a collapsible baffle;
FIG. 6 is a third schematic illustration of an embodiment of an airlock including a collapsible baffle;
FIG. 7 is a first schematic illustration of an embodiment of an airlock including collapsible side walls;
FIG. 8 is a second schematic illustration of an embodiment of an airlock including collapsible side walls;
FIG. 9 is a third schematic illustration of an embodiment of an airlock including collapsible side walls; and
FIG. 10 is a schematic illustration of an embodiment of an airlock including inflatable bladders.

### DETAILED DESCRIPTION

A detailed description of one or more embodiments of the disclosed apparatus and method are presented herein by way of exemplification and not limitation with reference to the Figures. More specifically, the embodiments disclosed herein are airlocks that include features to reduce a mass of air vented or lost to an external environment outside the airlock. The embodiments reduce a physical volume of the airlock before exposure of the interior of the airlock to the external environment. Reducing the volume of the airlock reduces the mass of air lost to the external environment when the airlock is opened to the external environment.

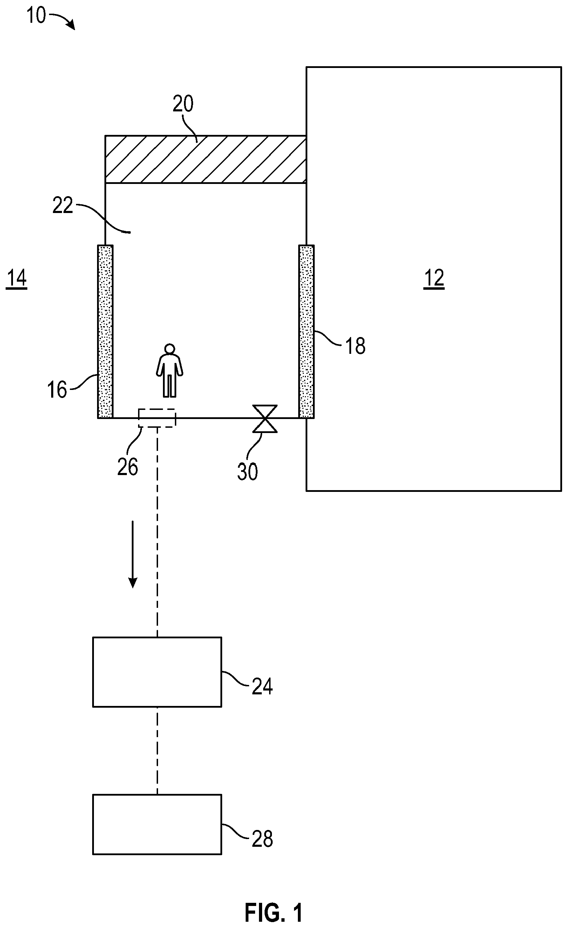

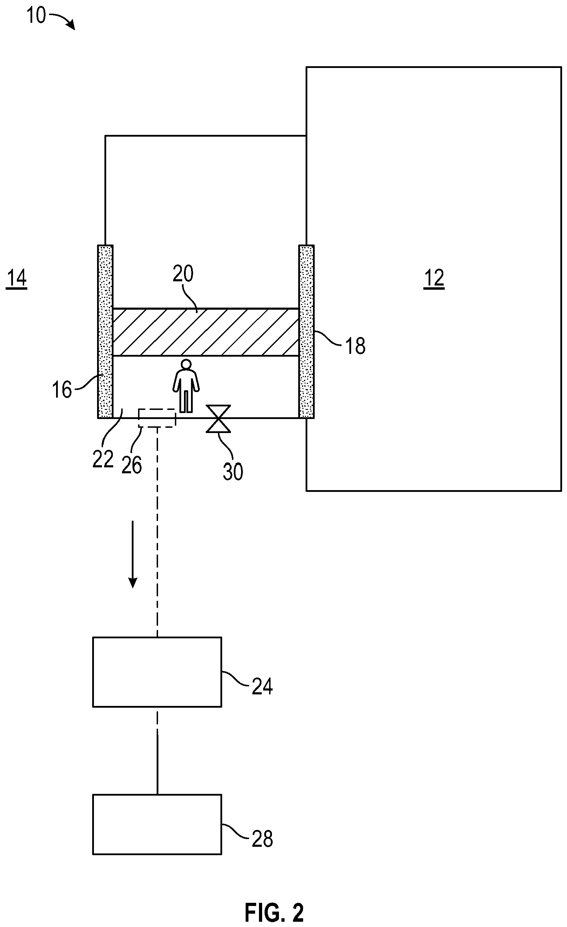

Referring now to FIG. 1, illustrated is an embodiment of an airlock 10 for transition of personnel and articles between a pressurized volume 12, such as an extraplanetary habitat, and an external environment 14, such as a low pressure, high pressure, hazardous gaseous, or vacuum environment. The airlock 10 includes an external hatch 16 between the external environment 14 and the airlock 10, and an internal hatch 18 between the airlock 10 and the pressurized volume 12. A piston 20 is positioned in the airlock 10 and is movable between a home position as shown in FIG. 1, and an extended position as shown in FIG. 2. Movement of the piston 20 from the home position to the extended position reduces an enclosed volume 22 of the airlock 10. In some embodiments, such as shown, personnel depicted schematically at 60 is in the airlock 10 as the piston 20 is moved from the home position to the extended position. The amount of extension of the piston 20 may be controlled by, for example, a controller (not shown) utilized by the personnel 60, and or may use proximity sensors or the like to determine a position of the personnel 60 relative to the piston 20 and automatically stop extension of the piston 20 at an appropriate position to maximize the volume reduction while not impacting the personnel 60. While in some embodiments, the personnel 60 enters the airlock 10 before the piston 20 is operated to reduce the volume, in other embodiments the personnel 60 may enter the airlock 10 after the volume is reduced.

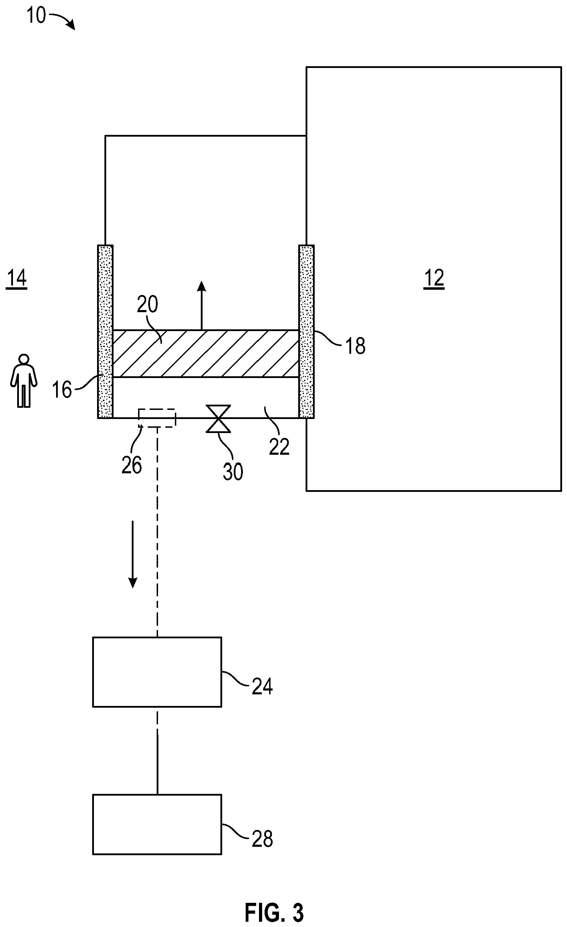

As the piston 20 moves from the home position to the extended position, a vacuum pump 24 removes air from the airlock 10 through a pump port 26, and captures the removed air at, for example, an air tank 28. Referring now to FIG. 3, the pump port 26 is closed and sealed, and a vent valve 30 is opened to evacuate additional air from the enclosed volume 22. The external hatch 16 is then opened, and if desired, the piston 20 is returned to the home position. This reduction of the enclosed volume 22 and evacuation of the air present in the enclosed volume reduces the mass of air lost to the external environment when the external hatch 16 is opened. While in some embodiments the external hatch 16 is opened before the piston 20 is returned to the home position, in other embodiments the piston 20 is returned to the home position and then the external hatch 16 is opened. Alternatively, the piston 16 may be left in the extended position until it is desired to expand the enclosed volume 22 of the airlock 10.

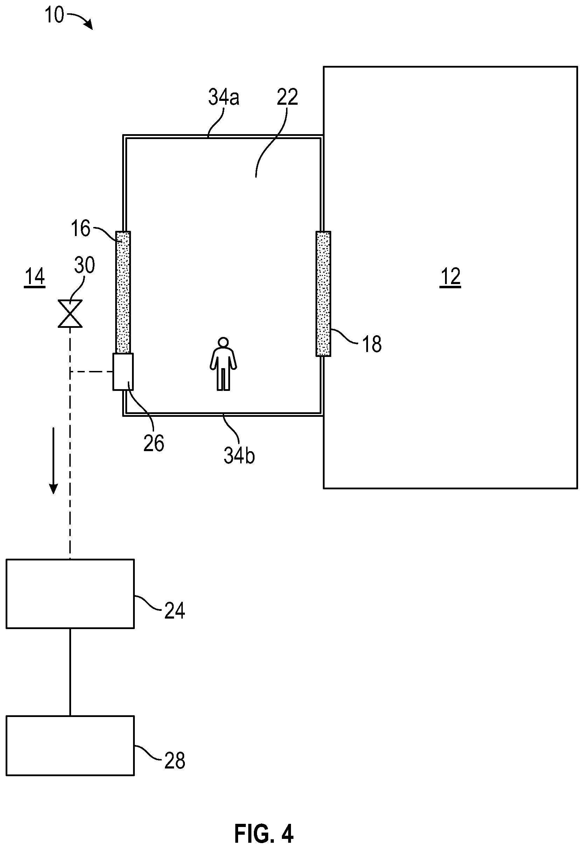

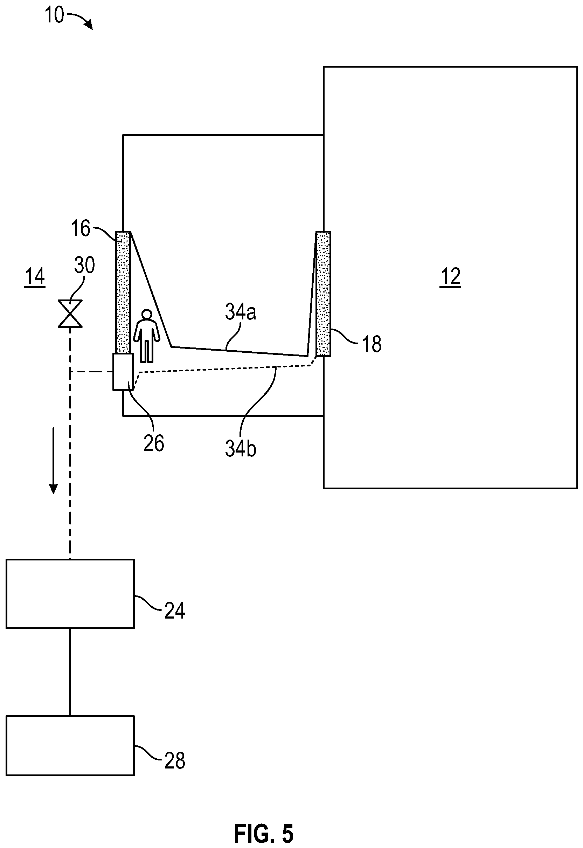

In another embodiment, illustrated in FIGs. 4-6, a flexible structure such as a bladder 34 is located inside of the airlock 10. The bladder 34 lines airlock walls 36 of the airlock 10, and in some embodiments may include a first bladder portion 34a and a second bladder portion 34b. When the vacuum pump 24 begins removing the air from the airlock 10, the first bladder portion 34a and the second bladder portion 34b collapse toward each other, as illustrated in FIG. 5, reducing the enclosed volume 22 inside the airlock 10. In some embodiments, such as shown, the personnel 60 is in the airlock 10 as the bladder portions 34a, 34b collapse toward each other. The amount of collapse of the bladder portions 34a, 34b may be controlled by, for example, the controller utilized by the personnel 60, and or may use proximity sensors or the like to determine a position of the personnel 60 relative to the bladder portions 34a, 34b and automatically stop collapse of the bladder portions 34a, 34b at an appropriate position to maximize the volume reduction while not impacting the personnel 60. While in some embodiments, the personnel 60 enters the airlock 10 before the bladder portions 34a, 34b are collapsed to reduce the volume, on other embodiments the personnel 60 may enter the airlock 10 after the volume is reduced.

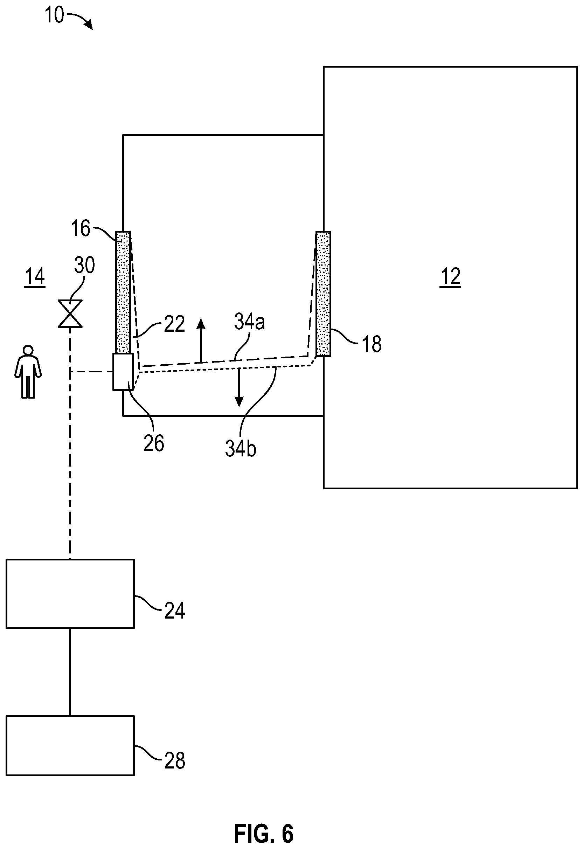

The removed air is captured at the air tank 28. Referring now to FIG. 6, the pump port 26 is closed and sealed, and the vent valve 30 is opened to evacuate additional air from the enclosed volume 22. The external hatch 16 is then opened, and if desired, the bladder portions 34a and/or 34b are returned to the airlock walls 36 of the airlock 10. This reduction of the enclosed volume 22 and evacuation of the air present in the enclosed volume reduces the mass of air lost to the external environment when the external hatch 16 is opened. While in some embodiments the external hatch 16 is opened before the bladder portions 34a and/or 34b are returned to the airlock walls 36, in other embodiments the bladder portions 34a and/or 34b are returned to the airlock walls 36 and then the external hatch 16 is opened. Alternatively, the bladder portions 34a and/or 34b may be left in the collapsed position until it is desired to expand the enclosed volume 22 of the airlock 10.

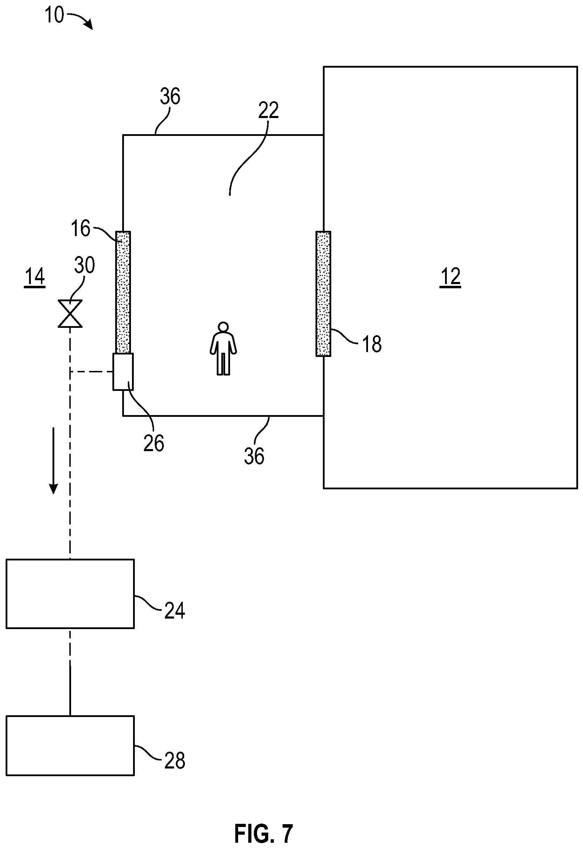

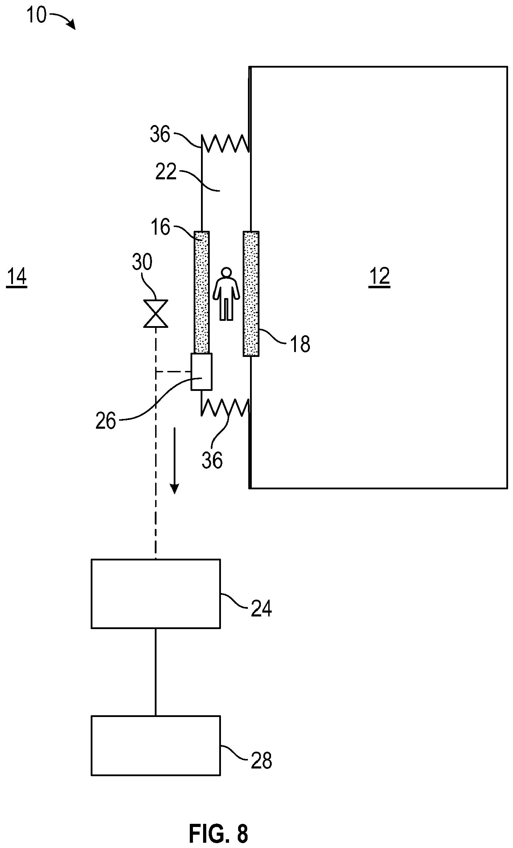

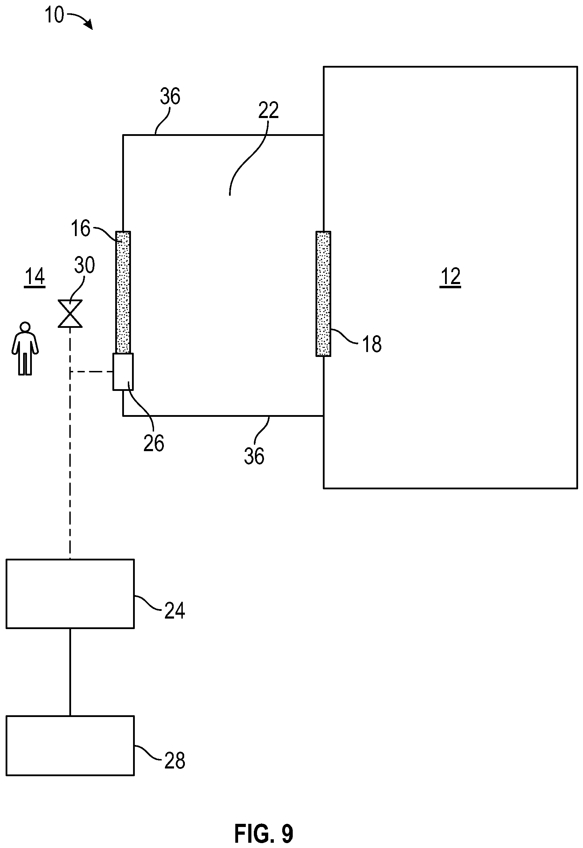

Referring to FIGs. 7-9, in another embodiment, the airlock 10 itself is a collapsible structure. In this embodiment, such as shown in FIG. 8, opposing airlock walls 36 are collapsible to bring the external hatch 16 closer to internal hatch 18 thereby reducing the enclosed volume 22 of the airlock 10. As the airlock walls 36 are collapsed the vacuum pump 24 removes the air from the enclosed volume 22 and is captured at the air tank 28 and the vent valve 30 is opened to evacuate additional air from the enclosed volume 22. In some embodiments, such as shown, the personnel 60 is in the airlock 10 as the airlock walls 36 are collapsed. The amount of collapse of the airlock walls 36 may be controlled by, for example, the controller utilized by the personnel 60, and or may use proximity sensors or the like to determine a position of the personnel 60 relative to the airlock walls 36 and automatically stop collapse of the airlock walls 36 at an appropriate position to maximize the volume reduction while not impacting the personnel 60. While in some embodiments, the personnel 60 enters the airlock 10 before the airlock walls 36 are collapsed to reduce the volume, on other embodiments the personnel 60 may enter the airlock 10 after the volume is reduced. Referring now to FIG. 9, the external hatch 16 is opened and, if desired, the airlock walls 36 are then extended. While in some embodiments the external hatch 16 is opened before the airlock walls 36 are extended, in other embodiments the airlock walls 36 are extended and then the external hatch 16 is opened. Alternatively, the external walls 36 may be left in the collapsed position until it is desired to expand the enclosed volume 22 of the airlock 10.

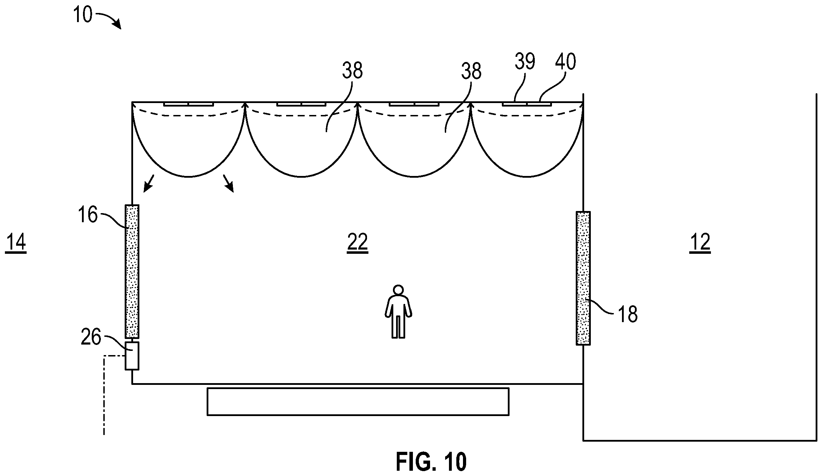

In another embodiment, illustrated in FIG. 10, the airlock walls 36 includes one or more inflatable bladders 38 affixed thereto. The bladders 38 are selectably inflated to reduce the enclosed volume 22 of the airlock 10. The inflation of the bladders 38 is controlled by, for example, heating or cooling the air within the bladders 38 via heaters (e.g., resistive heaters) 39 and coolers (e.g., Peltier cooling devices) 40. Further, the bladders 38 may be placed in unused portions of the airlock 10, such as the corners. In some embodiments, such as shown, the personnel 60 is in the airlock 10 as the bladders 38 are inflated. The amount of inflation of the bladders 38 may be controlled by, for example, the controller utilized by the personnel 60, and or may use proximity sensors or the like to determine a position of the personnel 60 relative to the bladders 38 and automatically stop inflation of the bladders 38 at an appropriate position to maximize the volume reduction while not impacting the personnel 60. While in some embodiments, the personnel 60 enters the airlock 10 before the bladders are inflated to reduce the volume, on other embodiments the personnel 60 may enter the airlock 10 after the volume is reduced. Further, the bladders 38 may be disabled if the bladders 38 are torn or otherwise damaged, or if the larger volume of the airlock 10 is to be used.

In operation, the airlock 10 is opened to the pressurized volume 12 by opening the of the internal hatch 18, and habitat and shares the same pressure as the pressurized volume 12. In some embodiments, the personnel enters the airlock 10 through the internal hatch 18 at this point and the enclosed volume 22 is then reduced to that needed given the volume of personnel or other items in the enclosed volume 22. The internal hatch 18 is closed and the enclosed volume 22 is sealed. The enclosed volume 22 is depressurized and vented, and the personnel exit the airlock 10 through the external hatch 16 into the external environment 14. When the personnel are to return to the pressurized volume 12, the process is substantially reversed. While in some embodiments, the enclosed volume 22 is reduced after entry of the personnel thereinto, in other embodiments the enclosed volume 22 may be reduced before the personnel enter into the enclosed volume 22.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An airlock (12) for an extraplanetary environment, comprising:
an enclosed volume (22);
an interior hatch (18) separating the enclosed volume (22) from a pressurized space (12); and
an exterior hatch (16) separating the enclosed volume from an external environment (14);
wherein the enclosed volume is selectably variable to reduce a mass of resources, lost into the external environment from the enclosed volume.

2. The airlock of claim 1, further comprising a pump (24) operably connected to the enclosed volume (22) to remove air from the enclosed volume.

3. The airlock of claim 2, wherein the pump (24) is configured to be activated to remove air from the enclosed volume (22) when the enclosed volume is reduced.

4. The airlock of any preceding claim, further comprising a piston (20) located in the airlock (10), such that when the piston is moved from a home position to an extended position the enclosed volume (22) is reduced.

5. The airlock of any preceding claim, further comprising a flexible bladder (34) at least partially defining the enclosed volume (22).

6. The airlock of claim 5, wherein the bladder (34) is collapsible to reduce the enclosed volume (22), and/or
wherein the bladder is segmented around the enclosed volume.

7. The airlock of claim 5 or 6,
wherein the bladder (34) is configured to be inflated to reduce the enclosed volume (22), optionally
further comprising a heater (39) and/or a cooler (40) configured to control inflation of the bladder

8. The airlock of any preceding claim, wherein opposing walls of the airlock (10) are configured to collapse to reduce the internal volume, optionally
wherein the opposing walls include neither the interior hatch nor the exterior hatch.

9. A method of assembling an airlock (10) for an extraplanetary environment comprising:
defining an enclosed volume (22);
positioning an interior hatch (18) at the enclosed volume separating the enclosed volume from a pressurized space (12); and
positioning an exterior hatch (16) at the enclosed volume separating the enclosed volume from an external environment (14);
wherein the enclosed volume is selectably variable to reduce a mass of resources, lost into the external environment from the enclosed volume.

10. The method of claim 9, further comprising operably connecting a pump (24) to the enclosed volume (22) to remove air from the enclosed volume.

11. The method of claim 9 or 10, further comprising positioning a piston (20) in the airlock, such that when the piston is moved from a home position to an extended position the enclosed volume (22) is reduced.

12. The method of any of claims 9 to 11, further comprising positioning a flexible bladder (34) at least partially defining the enclosed volume, wherein the bladder is collapsible to reduce the enclosed volume (22), optionally
wherein the bladder is segmented around the enclosed volume.

13. The method of claim 12, wherein the bladder (34) is configured to be inflated to reduce the enclosed volume, optionally
further comprising connecting a heater (39) and/or a cooler (40) to the bladder (34) to control inflation of the bladder.

14. The method of any of claims 9 to 13, wherein opposing walls of the airlock (10) are configured to collapse to reduce the internal volume.

15. The method of any of claims 9 to 14, wherein the exterior hatch (16) is opened prior to the enclosed volume being selectably increased.
